# EUROPÄISCHE PATENTANMELDUNG

(11) **EP 2 944 982 A1**
(43) Veröffentlichungstag der Anmeldung: **18.11.2015**
(21) Anmeldenummer: 14401059.2
(22) Anmeldetag: 12.05.2014
(51) Int. Cl.: G01V 3/12

(54) **Sende- und Empfangsantenne für ein Suchantennen-Polarisationsinstrument**

(71) Anmelder: Ampass-Explorer Corp., Tortola (VG)
(72) Erfinder: Stauber, Siegfried, 8051 Zürich (CH)
(74) Vertreter: Klocke, Peter

(57) **Zusammenfassung**

Sende- und Empfangsantenne für ein Suchantennen-Polarisationsinstrument, die um einen Haltestift (3) drehbar gelagert einen Resonanzkörper (2) als Antenne und eine mit Abstand darunter befindliche Isolierplatte (6) mit einer auf der dem Resonanzkörper (2) abgewandten Seite angeordneten Metallschicht (7) als Elektrode bzw. zweite Antenne sowie drehfest eine mit Abstand zu der Isolierplatte (6) angeordnete Magnetplatte (8) mit einer Schirmung ((9) auf der der Isolierplatte (6) abgewandten Seite aufweist. Das eine Ende des Resonanzkörpers (2) ist zwischen der Magnetplatte (8) und einen zusätzlichen in der Nähe des Resonanzkörpers (2) angeordneten Antennen-Magnet (10) eingespannt, und das andere Ende des Resonanzkörpers (2) ist mittels eines Lager-Magneten (11) verspannt und gegenüber der Normalstellung vorgespannt. Durch eine entsprechende Sägezahnansteuerung wirkt diese Antenne wie eine singende Säge und ist gegenüber dem Stand der Technik in der Empfindlichkeit wesentlich verbessert.

## Beschreibung

Die vorliegende Erfindung betrifft eine Antenne für ein Suchantennen-Polarisationsinstrument, die um einen Haltestift drehbar gelagert einen Resonanzkörper als Antenne und eine mit Abstand darunter befindliche Isolierplatte mit einer auf der dem Resonanzkörper abgewandten Seite angeordneten Metallschicht als Elektrode bzw. zweite Antenne sowie drehfest eine mit Abstand zu der Isolierplatte angeordnete Magnetplatte mit einer Schirmung auf der der Isolierplatte abgewandten Seite aufweist.

Aus der DE 103 29 335 B4 ist ein Suchantennen-Polarisationsinstrument für eine Material-Detektoreinrichtung bekannt. Das dort beschriebene Suchantennen-Polarisationsinstrument umfasst eine derartige, vorstehend beschriebene Antenne.

Der vorliegenden Erfindung liegt die Aufgabe zugrunde, diese bekannte Antenne weiter auszubilden und den Empfang dieser Antenne für das Suchantennen-Polarisationsinstrument weiter zu verbessern.

Diese Aufgabe wird erfindungsgemäß mit den Merkmalen des Hauptanspruchs gelöst. Weitere vorteilhafte Ausgestaltungen sind den rückbezogenen Unteransprüchen zu entnehmen.

Gemäß der Erfindung ist das eine Ende des Resonanzkörpers zwischen der Magnetplatte und einem zusätzlichen in der Nähe des Resonanzkörpers angeordneten Antennen-Magnet eingespannt, so dass ein Ende der Antenne fest eingespannt ist. Das andere Ende des Resonanzkörpers als freies Ende ist mittels eines Lager-Magneten verspannt und gegenüber der Normalstellung vorgespannt. Damit wird das freie Ende immer auf der Isolierplatte festgehalten und die Antenne in Längsrichtung vorgespannt.

Wenn, wie gemäß einer besonderen Ausbildung der Erfindung, die Antenne in einen kürzeren und in einen längeren Abschnitt bezüglich des Haltestiftes unterteilt ist und der Antennen-Magnet in dem kürzeren Abschnitt und der Lager-Magnet in dem längeren Abschnitt angeordnet ist, kann die Antenne wie eine "singende Säge" betrieben werden. Dazu wird auf die Elektrode (zweite Antenne) und den Resonanzkörper als Antenne dasselbe Signal geschickt und nur die Differenz mittels einer entsprechenden elektronischen Schaltung ausgewertet. Damit fallen praktisch alle magnetischen und elektrischen Umwelteinflüsse weg. Die Antenne funktioniert dann wie eine "singende Säge" mit einem festgehaltenen Ende und einem losen vorgespannten Ende. Statt mechanischer Sägezähne wird ein gesteuertes elektrisches Sägezahn-Signal (Periode = Sägezahn + Pause) gesendet, wobei in der Pause das Rücksignal, wie in der DE 103 29 335 B4 beschrieben, ausgewertet wird.

Um die Sende- und Empfangsantenne optimal abzustimmen und deren Empfindlichkeit zu maximieren, ist der Lager-Magnet entlang des längeren Abschnittes in Längsrichtung hin verschiebbar angeordnet, um ihn vom freien Ende weg oder hin zu schieben.

Damit eine optimale Haltekraft auf kleinem Raum erreicht werden kann, ist gemäß einer weiteren bevorzugten Ausbildung der Erfindung der Lager-Magnet als Neodym-Magnet mit einer magnetischen Flussdichte von bis zu 150 mT bis 200 mT ausgebildet.

Die erfindungsgemäße Ausgestaltung der Sende- und Empfangsantenne für das Suchantennen-Polarisationsinstrument für das in der DE 103 29 335 B4 beschriebene Suchantennen-Polarisationsinstrument für eine Material-Detektoreinrichtung zeichnet sich durch eine höhere Empfindlichkeit für die zu messenden Signale aus. Der Inhalt der DE 103 29 335 B4 wird, soweit erforderlich, in diese Anmeldung mit eingebracht.

Nachfolgend wird die Erfindung anhand eines Ausführungsbeispiels in Verbindung mit der begleitenden Zeichnung näher erläutert. Weitere Merkmale der Erfindung ergeben sich aus der folgenden Beschreibung eines Ausführungsbeispiels der Erfindung in Verbindung mit den Ansprüchen und der Zeichnung. Die einzelnen Merkmale können je für sich oder zu mehreren Ausführungsformen der Erfindung verwirklicht sein. Es stellen dar:
- Figur 1: eine Schnittdarstellung durch eine Antenne für ein Suchantennen-Polarisationsinstrument entlang der Linie A-A von Figur 2 und
- Figur 2: eine Draufsicht auf die Antenne gemäß Figur 1.

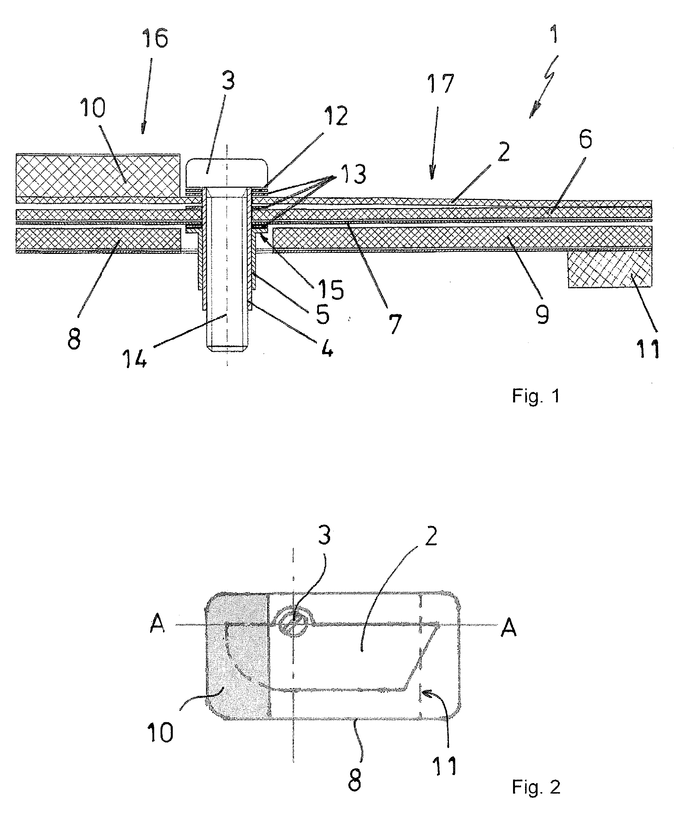

Figur 1 zeigt die Sende- und Empfangsantenne 1 mit dem als Antenne wirkenden Resonanzkörper 2, beispielsweise aus einem dünnen Nickelblech, der mittels eines Stiftes 3 in Form einer Kreuzschlitzschraube in einem nicht dargestellten Haltestück drehbar um die Längsachse des Haltestifts 3 gehalten ist. Der Haltestift 3 weist entlang seines Schaftes 14 ein diesen umgebendes Teflonrohr 4 auf, das zur Isolierung dient. Darüber befindet sich eine Niethülse 5 mit einem Auflageflansch für eine mit Abstand zu dem Resonanzkörper 2 angeordnete Isolierplatte 6 zu tragen. Sowohl auf dem Flansch 15 als auch zwischen dem Resonanzkörper 2 und der Isolierplatte 6 und oberhalb des Resonanzkörpers 2 befinden sich Distanzringe 13. Mittels einer Wellscheibe 12 zwischen dem oberen Distanzring und dem Kopf des Haltestiftes 3 werden der Resonanzkörper 2 und die Isolierplatte 6 zwischen dem Kopf des Haltestiftes 3 und dem Auflageflansch 15 der Niethülse 5 drehbar fixiert. Die Isolierplatte 6 kann beispielsweise aus Polycarbonat oder Keramik bestehen. Auf dieser ist eine Elektrode 7, die auch als zweite Antenne fungieren kann, beispielsweise in Form einer Kupferfolie aufgebracht. Unterhalb der Isolierplatte 6 befindet sich mit Abstand eine Magnetplatte 8, die auf der Unterseite einen Schirm 9, beispielsweise ebenfalls aus einer Kupferfolie trägt. Wie aus der Figur ersichtlich, ist der Haltestift 3 derart angeordnet, dass er den Resonanzkörper 2, die Isolierplatte 6 und die Magnetplatte 8 in einen kleineren Abschnitt 16 und einen größeren Abschnitt 17 unterteilt. Dieser Aufbau ist im Prinzip bereits in der DE 103 29 335 B4 offenbart.

Der Magnet der Magnetplatte weist eine magnetische Flussdichte von beispielsweise 15 bis 20 mT auf. Auf dem kürzeren Abschnitt 16 des Resonanzkörpers 2 befindet sich ein Antennen-Magnet mit einer Stärke von zirka 10 mT, beispielsweise in Form eines Plastikmagneten, der zusammen mit dem gegenüberliegenden Abschnitt der Magnetplatte 8 das kurze Ende des Resonanzkörpers 2 festhält. An dem freien Ende des längeren Abschnitts 17 der Antenne 1 befindet sich an der Magnetplatte 8 ein Lager-Magnet 11, beispielsweise ein Neodym-Magnet mit einer Stärke bis zu 150 mT bis 200 mT und einem Durchmesser von 3 - 6 mm. Dieser kann entlang der Magnetplatte 8 verschoben werden, um die Empfindlichkeit der Sende- und Empfangsantenne entsprechend den jeweiligen Bedürfnissen zu optimieren. Durch einen derartigen kleinen starken Lager-Magneten 11 wird der gegenüberliegende Bereich des Resonanzkörpers 2 gegen die Isolierplatte 6 gedrückt (gezogen) und hält diese im Bereich des Lager-Magneten 11, vorzugsweise das freie Ende, fest. Durch eine entsprechende Ansteuerung mit einem Sägezahnsignal mit Pause kann das zurückkommende Sendesignal in der Pause empfangen und über eine Differenzschaltung der Signale zwischen Elektrode 7 und Resonanzkörper 2 mit gegenüber dem Stand der Technik verbesserter Empfindlichkeit ausgewertet werden.

Figur 2 zeigt die Sende- und Empfangsantenne von oben, so dass die Form des Resonanzkörpers 2 und der darunter befindlichen Isolierplatte 6 ersichtlich ist. Es ist auch erkennbar, wo sich der Haltestift 3 in Bezug zu dem Resonanzkörper 2 und der Isolierplatte 6 befindet. Diese Ausgestaltung des Resonanzkörpers 2 ist aus der DE 103 29 335 B4 bekannt. Die Magnetplatte 8 unterhalb des Resonanzkörpers 2 und der Isolierplatte 6 weist größere Abmessungen, wie in der Figur, ersichtlich, auf. Der Antennen-Magnet 10 verdeckt in dieser Ansicht einen Teil des kürzeren Abschnitts des Resonanzkörpers 2 und der Isolierplatte 6 und der Lager-Magnet 11, der sich unterhalb der Magnetplatte 8 befindet, ist durch eine gestrichelte Linie angedeutet. Die Schnittdarstellung gemäß Figur 1 stellt einen Schnitt entlang der Linie A-A dar, so dass sich in Verbindung mit der Darstellung in Figur 1 ergibt, dass nur die Spitze des Resonanzkörpers 2 auf der Isolierplatte 6 festgehalten wird.

## Patentansprüche

1. Sende- und Empfangsantenne für ein Suchantennen-Polarisationsinstrument, die um einen Haltestift (3) drehbar gelagert einen Resonanzkörper (2) als Antenne und eine mit Abstand darunter befindliche Isolierplatte (6) mit einer auf der dem Resonanzkörper (2) abgewandten Seite angeordneten Metallschicht (7) als Elektrode bzw. zweite Antenne sowie drehfest eine mit Abstand zu der Isolierplatte (6) angeordnete Magnetplatte (8) mit einer Schirmung ((9) auf der der Isolierplatte (6) abgewandten Seite aufweist, **dadurch gekennzeichnet, dass** das eine Ende des Resonanzkörpers (2) zwischen der Magnetplatte (8) und einen zusätzlichen in der Nähe des Resonanzkörpers (2) angeordneten Antennen-Magnet (10) eingespannt ist, und das andere Ende des Resonanzkörpers (2) mittels eines Lager-Magneten (11) verspannt und gegenüber der Normalstellung vorgespannt ist.

2. Sende- und Empfangsantenne nach Anspruch 1, **dadurch gekennzeichnet, dass** der Haltestift (3) die Antenne (1) in einen kürzeren (16) und einen längeren (17) Abschnitt unterteilt und der Antennen-Magnet (10) in dem kürzeren Abschnitt (16) und der Lager-Magnet (11) in dem längeren Abschnitt (17) angeordnet ist.

3. Antenne nach Anspruch 2, **dadurch gekennzeichnet, dass** der Lager-Magnet (11) entlang des längeren Abschnitt (17) in Längsrichtung verschiebbar ist.

4. Antenne nach einem der vorangegangenen Ansprüche, **dadurch gekennzeichnet, dass** der Lager-Magnet (11) als Neodym-Magnet mit einer magnetischen Flussdichte von bis zu 150 mT bis 200 mT ausgebildet ist.

## Geänderte Patentansprüche

### Geänderte Patentansprüche gemäss Regel 137(2) EPÜ.

1. Sende- und Empfangsantenne für ein Suchantennen-Polarisationsinstrument für eine Materialdetektoreinrichtung, die um einen Haltestift (3) drehbar gelagert, einen metallischen Resonanzkörper (2) als erste Elektrode bzw. erste Antenne und eine darunter befindliche Isolierplatte (6) mit einer auf der dem Resonanzkörper (2) abgewandten Seite angeordneten Metallschicht (7) als zweite Elektrode bzw. zweite Antenne sowie drehfest eine mit Abstand zu der Isolierplatte (6) angeordnete Magnetplatte (8) aufweist, wobei die Metallschicht (7) der Isolierplatte (6) und der metallische Resonanzkörper (2) einen Kondensator bilden, der Teil eines Schwingkreises der Material-Detektoreinrichtung ist, und wobei sich der Resonanzkörper (2), die Isolierplatte (6) sowie die Magnetplatte (8) in einer Normalstellung vollkommen parallel zueinander erstrecken, der Resonanzkörper (2) und die Isolierplatte (6) zentral miteinander verbunden sind, und zumindest der Resonanzkörper (2) freie Resonanzkörperenden aufweist, **dadurch gekennzeichnet, dass**
- die Magnetplatte (8) auf der dem Resonanzkörper (2) abgewandten Seite der Isolierplatte (6) angeordnet ist und eine Schirmung (9) auf der der Isolierplatte (6) abgewandten Seite aufweist,
- an einem ersten Resonanzkörperende des Resonanzkörpers (2) nahe dem Haltestift (3) ein Antennen-Magnet (10) angeordnet ist, der das erste Resonanzkörperende zwischen der Magnetplatte (8) und dem Antennen-Magnet (10) in der Normallstellung eingespannt hält, und
- an der Magnetplatte (8) auf der die Schirmung (9) tragenden Seite fern dem Haltestift (3) ein Lagermagnet (11) angeordnet ist, der auf das andere zweite Resonanzkörperende des Resonanzkörpers (2) in der Normalstellung einwirkt, dieses verspannt und gegenüber der Normalstellung vorgespannt hält.
